# EUROPÄISCHE PATENTSCHRIFT

(11) **EP 3 159 088 B1**
(45) Veröffentlichungstag und Bekanntmachung des Hinweises auf die Patenterteilung: **05.12.2018**
(21) Anmeldenummer: 15191264.9
(22) Anmeldetag: 23.10.2015
(51) Int. Cl.: B26D 3/16

(54) **HANDZANGE**
HAND PLIERS
PINCE MANUELLE

(43) Veröffentlichungstag der Anmeldung: 26.04.2017
(73) Patentinhaber: Wezag GmbH Werkzeugfabrik, 35260 Stadtallendorf (DE)
(72) Erfinder: Zinser, Roman, 35279 Neustadt (DE)
(74) Vertreter: REHBERG HÜPPE + PARTNER

(56) Entgegenhaltungen:
- DE-A1- 19 940 408
- DE-A1-102012 101 758
- DE-U1- 9 010 931

## Beschreibung

### TECHNISCHES GEBIET DER ERFINDUNG

Die Erfindung betrifft eine Handzange in Ausbildung als Schneidzange, mittels welcher Werkstücke wie beispielsweise Kabel durchtrennt werden können.

Die Dokumente DE 199 40 408 A1, DE 10 2012 101758 A1 und DE 90 10 931 U1 beziehen sich auf ähnliche Handzangen.

### AUFGABE DER ERFINDUNG

Aufgabe der Erfindung ist es, eine Handzange zum Durchtrennen von Werkstücken, insbesondere Werkstücken wie Kabeln etc., hinsichtlich der Bedienung bei Beachtung der Bauteilanforderungen und der Bauraumerfordernisse zu verbessern.

### LÖSUNG

Die Aufgabe der Erfindung wird erfindungsgemäß mit den Merkmalen der unabhängigen Patentansprüche 1 gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß verfügt eine Handzange über eine feste Schneidbacke und eine bewegliche Schneidbacke, welche beispielweise mit sichel- oder spiralförmigen Schneiden ausgebildet sein können und eine geschlossene Aufnahme für ein Werkstück ausbilden, wobei sich mit der Schließbewegung der Handzange die Querschnittsfläche der von den Schneidbacken begrenzten Aufnahme verringert, womit ein Einschneiden in das Werkstück erfolgen kann.

Die bewegliche Schneidbacke weist eine Verzahnung auf. Diese Verzahnung ist einerseits mit einem Schubhebel in Eingriff bringbar. Mit manueller Betätigung eines beweglichen Handhebels wird der Schubhebel bewegt. In Folge des Eingriffs des Schubhebels in die Verzahnung erzeugt die Bewegung des Schubhebels eine Schließbewegung der Schneidbacken. Darüber hinaus kann ein Rasthebel in Eingriff mit der Verzahnung der beweglichen Schneidbacke gebracht werden. Dies dient der Sicherung einer erreichten Stellung der Schneidbacken, womit beispielsweise ein Auffedern der Schneidbacken mit Verringerung der auf die Handhebel der Handzange applizierten Betätigungskräfte vermieden werden kann oder für mehrere sukzessive Teilarbeitshübe eine Wiederöffnung der Handhebel ermöglicht werden kann, ohne dass dies mit einer Öffnungsbewegung der Schneidbacken verbunden ist.

Erfindungsgemäß verfügt die Handzange über eine erste maximale Öffnungsstellung. Diese erste maximale Öffnungsstellung gibt einen maximalen Öffnungswinkel der Handhebel vor, für welchen der Rasthebel und/oder der Schubhebel in Eingriff mit der Verzahnung der beweglichen Schneidbacke stehen/steht oder bringbar sind/ist. Insbesondere korreliert die erste maximale Öffnungsstellung mit dem maximalen Öffnungswinkel der Handhebel zu Beginn jedes Teilarbeitshubs.

Es hat sich herausgestellt, dass es von Vorteil ist, wenn die Handzange neben der genannten ersten maximalen Öffnungsstellung auch eine zweite maximale Öffnungsstellung besitzt. In der zweiten maximalen Öffnungsstellung ist ein Öffnungswinkel der Handhebel größer als in der ersten maximalen Öffnungsstellung. Darüber hinaus stehen/steht in der zweiten maximalen Öffnungsstellung der Rasthebel und/oder der Schubhebel nicht in Eingriff mit der Verzahnung der beweglichen Schneidbacke. Dies hat zur Folge, dass mit Herbeiführung der zweiten maximalen Öffnungsstellung eine nicht durch einen Eingriff des Schubhebels und/oder des Rasthebels in die Verzahnung behinderte Relativbewegung der Schneidbacken möglich ist. Diese ungehinderte Relativbewegung der Schneidbacken kann einerseits genutzt werden, um die Schneidbacken manuell (ohne hiermit verbundene Schwenkbewegung der Handhebel) so zu verschwenken, dass sich eine von den Schneidbacken begrenzte Aufnahme mit maximaler Querschnittsfläche ergibt oder sogar die bewegliche Schneidbacke so weit verschwenkt wird, dass die Aufnahme nicht mehr von den Schneidbacken in Umfangsrichtung geschlossen ist, sondern sich einseitig öffnet. Über diese manuelle Bewegung der Schneidbacken kann somit eine Aufnahme geschaffen werden, in welche besonders einfach das Werkstück eingeführt werden kann. Ist dies erfolgt, kann unter Beibehaltung der zweiten maximalen Öffnungsstellung auch eine manuelle Bewegung der Schneidbacken (wiederum ohne Veränderung der Stellung der Handhebel) derart erfolgen, dass sich die Querschnittsfläche der von den Schneidbacken begrenzten Aufnahme wieder verringert, bis die beiden Schneidbacken an der Mantelfläche des Werkstücks anliegen. In dieser teilgeschlossenen Stellung der Schneidbacken kann dann die erste maximale Öffnungsstellung herbeigeführt werden, womit dann der anschließende Teilarbeitshub unmittelbar mit an der Mantelfläche des Werkstücks anliegenden Schneidbacken beginnt, so dass ein unnötiger Leerhub verringert oder vermieden ist. Somit ist für die erfindungsgemäße Handzange die Handhabung verbessert.

Darüber hinaus werden im Rahmen der Erfindung die genannten Öffnungsstellungen auf einfache und vorteilhafte Weise gewährleistet:
Die erste maximale Öffnungsstellung ist durch einen Anschlag vorgeben, der von dem Rasthebel ausgebildet ist. An diesem Anschlag liegt der bewegliche Handhebel in der ersten maximalen Öffnungsstellung an. Damit ist der Rasthebel multifunktional eingesetzt. Andererseits ist unter Umständen möglich, dass unter Nutzung des Schwenk-Freiheitsgrads des Rasthebels je nach Stellung des Rasthebels der genannte Anschlag zur Vorgabe der ersten maximalen Öffnungsstellung wirksam sein kann oder aber nicht wirksam ist, womit der Wechsel zu der zweiten maximalen Öffnungsstellung ermöglicht werden kann.

Für die Vorgabe der zweiten maximalen Öffnungsstellung ist ebenfalls ein Anschlag vorgeben. Dieser Anschlag ist von dem Rasthebel selber ausgebildet oder von einem Schwenklager des Rasthebels, insbesondere einem Schwenkbolzen des Schwenklagers. An diesem Anschlag liegt der bewegliche Handhebel in der zweiten maximalen Öffnungsstellung an. Somit kann unter Umständen auf engem Bauraum von dem Rasthebel und unter Umständen einem Schwenklager desselben eine Bereitstellung der beiden erforderlichen Anschläge und damit die Vorgabe der beiden unterschiedlichen maximalen Öffnungsstellungen erfolgen.

Wenn die Handzange die erste und/oder zweite maximale Öffnungsstellung auch ohne entsprechende von dem Benutzer aufgebrachte Haltekräfte beibehalten soll, ist es vorteilhaft, wenn in der Handzange eine Feder vorhanden ist, welche den Handhebel in der jeweiligen Öffnungsstellung gegen den zugeordneten Anschlag beaufschlagt. Hierfür können durchaus unterschiedliche Federn zum Einsatz kommen. Für eine erfindungsgemäße Ausgestaltung ist aber der bewegliche Handhebel in der ersten maximalen Öffnungsstellung einerseits und in der zweiten maximalen Öffnungsstellung andererseits durch die selbe Öffnungsfeder gegen den jeweiligen Anschlag beaufschlagt, wodurch sich eine besonders kompakte Ausgestaltung mit multifunktionaler Nutzung der Öffnungsfeder ergibt. Möglich ist hierbei sogar, dass diese Öffnungsfeder auch dafür verantwortlich ist, (beispielsweise nach dem Durchlaufen von Teilarbeitshüben mit Reduzierung der Handkräfte) automatisch die Handhebel wieder in die zugeordnete erste maximale Öffnungsstellung zu überführen.

Grundsätzlich möglich ist, dass der Rasthebel über eine getriebliche Verbindung jedweder Art manuell von einem Betätigungsorgan betätigt wird. Für einen besonderen Vorschlag der Erfindung bildet aber der Rasthebel einstückig in einem Endbereich desselben ein Betätigungsorgan aus, welches aus dem Zangenkopf herausragt, so dass das Betätigungsorgan von außen für den Benutzer zugänglich ist zwecks Manipulation des Rasthebels. Auf diese Weise können weitere getriebliche Verbindungen zur Betätigung des Rasthebels entfallen, womit auch eine unmittelbare Betätigungshaptik gewährleistet ist.

Während grundsätzlich auch möglich ist, dass ein Handgriff des beweglichen Handhebels und ein Rasthebel in unterschiedlichen Halblängsebenen der Handzange angeordnet sind, schlägt die Erfindung in einer bevorzugten Ausführungsform vor, dass der Handgriff des beweglichen Handhebels und der Rasthebel in derselben Halblängsebene der Handzange angeordnet sind, womit sich eine verbesserte Bauraumgestaltung ergibt, welche auch ermöglicht, dass der Rasthebel, beispielsweise von einem Daumen der die Handhebel umschließenden Hand, nicht von den Handgriffen weg betätigt werden muss, sondern in Richtung der Handhebel verschwenkt werden kann, was zu einer weiter verbesserten Handhabung führt.

Während durchaus möglich ist, dass der Rasthebel in Vorschubrichtung des Schubhebels hinter dem Schubhebel mit der Verzahnung der beweglichen Schneidbacke in Eingriff steht, schlägt die Erfindung für eine weitere Ausgestaltung vor, dass der Rasthebel in Vorschubrichtung des Schubhebels vor dem Schubhebel mit der Verzahnung der beweglichen Schneidbacke in Eingriff steht.

In weiterer Ausgestaltung der erfindungsgemäßen Handzange sind der Rasthebel und der Schubhebel über eine Beaufschlagungsfeder in Richtung der Verzahnung der beweglichen Schneidbacke beaufschlagt. Hierzu kann jeweils ein Federfußpunkt der Beaufschlagungsfeder an dem Rasthebel und an dem Schubhebel abgestützt sein. Auf diese Weise ist die Beaufschlagungsfeder multifunktional eingesetzt. Zusätzlich zu der Beaufschlagungsfeder kann dann eine Öffnungsfeder vorhanden sein, welche eine auf den beweglichen Handhebel wirkende Öffnungskraft erzeugt. Dies hat zur Folge, dass die Steifigkeiten und Vorspannungen der Beaufschlagungsfeder einerseits und er Öffnungsfeder andererseits unabhängig voneinander dimensioniert werden können, womit die Anpresskraft des Rasthebels und des Schubhebels in die Verzahnung der beweglichen Schneidbacke (und damit auch die für die Öffnungsbewegung der Schneidbacken zu überwindenden ratschenartigen Kräfte) unabhängig gestaltet werden können von der Gestaltung der Öffnungskraft in Folge der Öffnungsfeder, mit welcher die Handhebel auseinandergedrückt werden. Möglich ist hierdurch auch, dass erhöhte Betätigungskräfte für den Rasthebel vermieden sind, wie diese auftreten könnten, wenn der Rasthebel unmittelbar oder mittelbar auch von der Öffnungsfeder beaufschlagt wäre, so dass für die Verschwenkung des Rasthebels erhöhte Kräfte aufzubringen wären.

Für eine weitere erfindungsgemäße Ausgestaltung ist der Anschlag, über welchen die erste maximale Öffnungsstellung vorgegeben wird, von einer Stirnseite eines Hebelteils des Rasthebels ausgebildet. Dieses Hebelteil bildet darüber hinaus eine seitliche Kontaktfläche aus, an welcher in der zweiten maximalen Öffnungsstellung eine Anlagefläche des beweglichen Handhebels anliegt. Durch den Kontakt zwischen der Kontaktfläche und der Anlagefläche kann gewährleistet werden, dass in der ersten maximalen Öffnungsstellung keine Rückschwenkung des Rasthebels in Folge der Beaufschlagungsfeder möglich ist und somit kein Eingriff des Rasthebels in die Verzahnung der beweglichen Schneidbacke erfolgt. Wird hingegen der bewegliche Handhebel ausgehend von der ersten maximalen Öffnungsstellung u. U. lediglich geringfügig in Schließrichtung bewegt, gleitet die Kontaktfläche entlang der Anlagefläche, bis der Formschluss zwischen Kontaktfläche und Anlagefläche beseitigt ist, womit dann der Rasthebel in die Verzahnung der beweglichen Schneidbacke eingreifen kann, eine Begrenzung auf die erste maximale Öffnungsstellung erfolgt und ein Teilarbeitshub beginnen kann. Vorzugsweise ist die Kontaktfläche des Hebelteils konzentrisch zu der Schwenkachse des Handhebels angeordnet.

Zur Bereitstellung der Anschlagfläche für den von der Stirnseite des Hebelteils des Rasthebels ausgebildeten Anschlag einerseits und zur Bereitstellung der Anlagefläche für die seitliche Kontaktfläche des Hebelteils des Rasthebels kann der bewegliche Handhebel beliebig ausgeformt sein mit einer Ausnehmung oder anderweitigen Konturierung desselben. Vorzugsweise ist für die erfindungsgemäße Handzange die Anlagefläche des beweglichen Handhebels, die für den Kontakt mit der Kontaktfläche des Rasthebels bestimmt ist, von einem Vorsprung des beweglichen Handhebels ausgebildet.

Möglich ist des Weiteren, dass der Rasthebel als echter Hebel mit zwei Hebelteilen ausgebildet ist, wobei in einem dem Schwenklager abgewandten Endbereich des einen Hebelteils das Betätigungsorgan angeordnet ist, während in einem dem Schwenklager abgewandten Endbereich des anderen Hebelteils eine Rastnase oder Rastverzahnung ausgebildet ist. In einer erfindungsgemäßen Weiterbildung der Handzange ist allerdings eine Rastnase oder Rastverzahnung des Rasthebels zwischen einem Schwenklager des Rasthebels und einem oder dem Betätigungsorgan des Rasthebels (in demselben Hebelteil) angeordnet, wodurch sich eine besonders kompakte Anordnung ergibt. Dieses sowohl die Rastnase als auch das Betätigungsorgan ausbildende Hebelteil kann dann mit dem den Anschlag bereitstellenden Hebelteil über das Schwenklager des Rasthebels verbunden sein, wobei die beiden Hebelteile beispielsweise einen Winkel von 70° bis 110°, vorzugsweise 80° bis 100° bilden können.

Um eine freie Bewegung der Schneidbacken in der zweiten maximalen Öffnungsstellung zu ermöglichen, muss auch der Schubhebel außer Eingriff mit der Verzahnung der beweglichen Schneidbacke gebracht werden. Dies kann grundsätzlich auf beliebige Weise erfolgen. Für einen Vorschlag der Erfindung wird der Schubhebel bewegungsgesteuert durch die Bewegung des beweglichen Handhebels auf dem Weg von der ersten maximalen Öffnungsstellung zu der zweiten maximalen Öffnungsstellung außer Eingriff mit der Verzahnung der beweglichen Schneidbacke gebracht. Beispielsweise kann dies durch Herbeiführung eines unmittelbaren Kontakts zwischen dem beweglichen Handhebel und dem Schubhebel erfolgen, so dass der bewegliche Handhebel auf dem Weg von der ersten maximalen Öffnungsstellung zu der zweiten maximalen Öffnungsstellung den Schubhebel "mitnimmt". Hierzu kann der Schubhebel, insbesondere mit einem Fortsatz, für einen Öffnungswinkel, der größer als der erste maximale Öffnungswinkel ist, zur Anlage an einen gehäusefesten Anschlag kommen, womit dann die weitere Verschwenkung des beweglichen Handhebels in Öffnungsrichtung (infolge der gelenkigen Anlenkung des Schubhebels an den beweglichen Handhebel) zu der gewünschten Verschwenkung des Schubhebels weg von der Verzahnung der beweglichen Schneidbacke führt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Darstellung eine Handzange mit demontiertem Zangenkopfmodul.
- **Fig. 2**: zeigt in einer Draufsicht auf eine Zangenkopfebene die Handzange gemäß Fig. 1, wobei hier allerdings das Zangenkopfmodul montiert ist und eine Gehäuseplatte mit Kröpfung und eine Handhebelplatte eines Getriebemoduls nicht dargestellt sind.
- **Fig. 3**: zeigt ein Detail III der Handzange gemäß Fig. 2 zu Beginn eines Arbeitshubs.

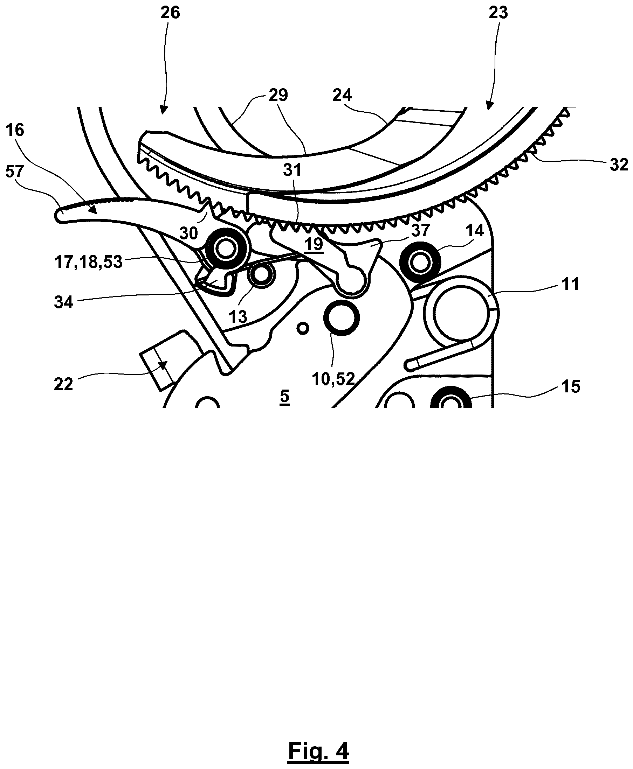

- **Fig. 4**: zeigt die Handzange in einem Detail gemäß Fig. 3 in einer teilgeschlossenen Stellung während eines ersten Teilarbeitshubs.
- **Fig. 5**: zeigt in einem Detail entsprechend Fig. 3 und 4 die Handzange mit erneuter Öffnung der Handhebel nach einem ersten Teilarbeitshub.
- **Fig. 6**: zeigt in einem Detail entsprechend Fig. 3 bis 5 die Handzange für den Abbruch eines Arbeitshubs mit einer Entlastung des Rasthebels durch Herbeiführung einer geringfügigen Schließbewegung.
- **Fig. 7**: zeigt in einem Detail entsprechend Fig. 3 bis 6 die Handzange für eine manuelle Verschwenkung des Rasthebels außer Eingriff mit einer Verzahnung einer beweglichen Schneidbacke zur Ermöglichung einer Öffnungsbewegung.
- **Fig. 8**: zeigt in einem Detail entsprechend Fig. 3 bis 7 die Handzange in einer zweiten maximalen Öffnungsstellung.
- **Fig. 9**: zeigt eine modulare Gruppe von Handzangen, welche mit demselben Grundmodul und unterschiedlichen Zangenkopfmodulen gebildet werden können.
- **Fig. 10**: zeigt eine Gruppe von Handzangen, welche mit denselben Zangenkopfmodulen und denselben Getriebemodulen, aber unterschiedlichen Handhebelmodulen gebildet werden können.
- **Fig. 11**: zeigt eine weitere Ausführungsform, bei welcher unterschiedliche Handzangen mit denselben Zangenkopfmodulen und denselben Getriebemodulen, aber unterschiedlichen Handhebelmodulen gebildet werden können.

### FIGURENBESCHREIBUNG

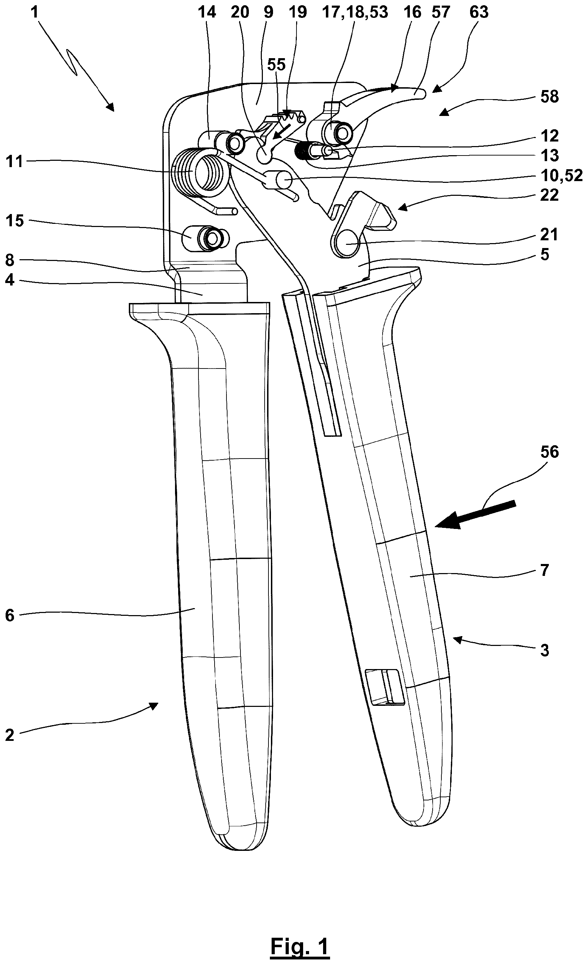

**Fig. 1** zeigt eine teildemontierte Handzange 1 mit einem festen Handhebel 2 sowie einem beweglichen Handhebel 3. Die Handhebel 2, 3 sind jeweils mit einer länglichen Handhebelplatte 4, 5 gebildet, welche jeweils in dem für den Benutzer der Handzange 1 zugänglichen Bereich von einem vorzugsweise elastomeren Handgriff 6, 7 ummantelt sind, dessen Außenkontur und Steifigkeit für den Betätigungskontakt mit der Hand des Benutzers optimiert ist. Die Handhebelplatte 4 setzt sich über eine Kröpfung 8 integral fort in eine Gehäuseplatte 9. Eine Zangenkopfebene wird vorgegeben durch die Erstreckungsebene der Gehäuseplatte 9. Die Gehäuseplatte 9 dient der verschwenkbaren Anlenkung des beweglichen Handhebels 3, der verschwenkbaren Abstützung von Getriebeelementen des Antriebsgetriebes der Handzange 1 und der Bereitstellung von Befestigungen für ein Zangenkopfmodul.

An der Gehäuseplatte 9 ist ein Schwenkbolzen 10 zur Bildung eines Schwenklagers 52 gehalten, mit welchem der bewegliche Handhebel 3 gegenüber der Gehäuseplatte 9 und damit dem festen Handhebel 2 verschwenkbar gelagert ist. Zusätzlich stützt sich eine Öffnungsfeder 11, hier ein Schenkel einer Spiral- oder Schenkelfeder, an dem Schwenkbolzen 10 ab. Die Gehäuseplatte 9 trägt einen Bolzen 12, welcher sich durch eine Beaufschlagungsfeder 13, hier ebenfalls eine Spiral- oder Schenkelfeder, erstreckt. Des Weiteren trägt die Gehäuseplatte 9 mit abgestuften Bolzen oder Hülsen gebildete Abstandshalter 14, 15. Ein Rasthebel 16 ist über einen Schwenkbolzen 17 unter Bildung eines Schwenklager 53 gegenüber der Gehäuseplatte 9 verschwenkbar gelagert, wobei der Schwenkbolzen 17 hierbei gleichzeitig mit beidseits der Rasthebel 16 auskragenden abgestuften Endbereichen einen weiteren Abstandshalter 18 bildet. Ein Schubhebel 19 ist verschwenkbar über ein Schwenklager 20 an der Handhebelplatte 5 angelenkt, wobei das mit dem Schwenkbolzen 10 gebildete Schwenklager 52 zwischen dem Schwenklager 20 für die Anlenkung des Schubhebels 19 und dem Handgriff 7 angeordnet ist. Für das dargestellte Ausführungsbeispiel ist das Schwenklager 20 gebildet mit einem teilkreisförmigen Ausschnitt der Handhebelplatte 5 mit einem Bogenwinkel geringfügig größer als 180°, in welche ein teilzylindrischer Endbereich des Schubhebels 19 eingepresst oder "eingeclipst" ist.

In einem Schwenklager 21, welches sich zwischen dem Handgriff 7 und dem Schwenkbolzen 10 befindet, ist an dem Handhebel 3 ein Feststellhebel 22 angelenkt.

Der Handhebel 3, der Feststellhebel 22, der Rasthebel 16 und der Schubhebel 19 sind um Schwenkachsen verschwenkbar, welche parallel zueinander und vertikal zur Zangenkopfebene orientiert sind. Während einer derartigen Schwenkbewegung erfolgt zumindest teilweise eine Führung der Getriebeelemente oder der Handhebelplatte 5, des Rasthebels 16 und des Schubhebels 19 durch die Gehäuseplatte 9. Die Öffnungsfeder 11 und die Beaufschlagungsfeder 13 werden mit einem Torsionsmoment beaufschlagt, dessen Vektor ebenfalls vertikal zur Zangenkopfebene orientiert ist. In dem in Fig. 1 dargestellten teilmontierten Zustand können die Bauelemente teilweise oder sämtlich lose an der Gehäuseplatte 9 gehalten sein oder hieran verliersicher gehalten sein.

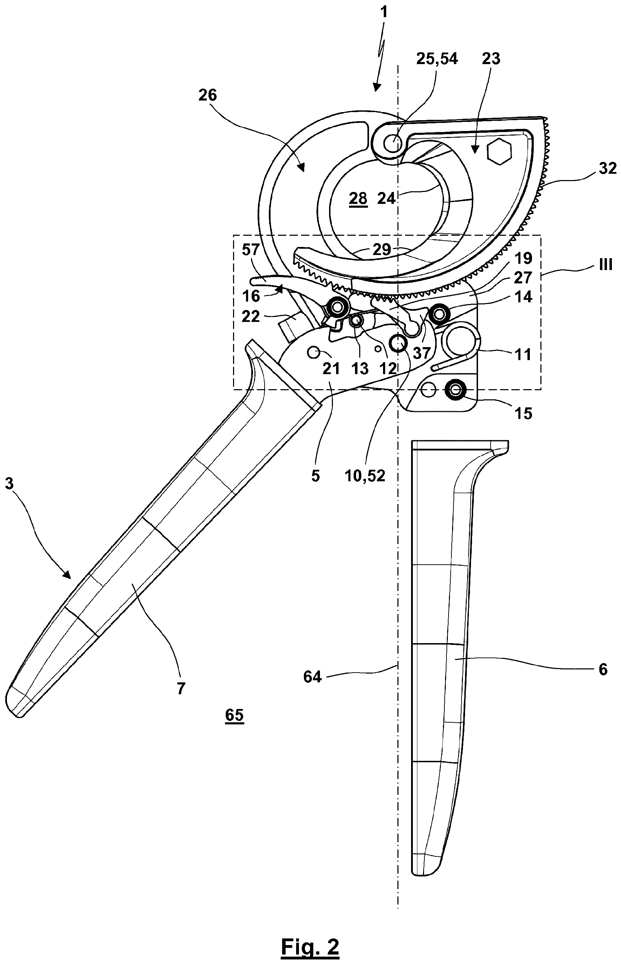

**Fig. 2** zeigt die Handzange 1 in einem anderen teilmontierten Zustand. Hierbei ist von dem festen Handhebel 2 lediglich der Handgriff 6 dargestellt, während die Handhebelplatte 4 und die Gehäuseplatte 9 nicht dargestellt sind. Eine bewegliche Schneidbacke 23 verfügt über eine innenliegende, in grober Näherung sichelförmige oder teilspiralförmige Schneide 24 sowie eine außenliegende Verzahnung 32 entlang eines Teilkreisbogens. Die bewegliche Schneidbacke 23 ist über ein mit einem Schwenkbolzen 54 gebildetes Schwenklager 25 an einer festen Schneidbacke 26 angelenkt. Die feste Schneidbacke 26 ist integral mit einer Gehäuseplatte 27 ausgebildet. Hierbei erstrecken sich die Gehäuseplatte 27 und die Schneidbacken 23, 26 parallel zur Zangenkopfebene mit einer Verschwenkung der beweglichen Schneidbacke 23 um die durch das Schwenklager 25 vorgegebene Schwenkachse, die vertikal zur Zangenkopfebene orientiert ist. Die Schneidbacken 23, 26 sind mit möglichst kleinem Abstand aneinander vorbeigeführt.

In der in Fig. 2 dargestellten Betriebsstellung bilden die Schneidbacken 23, 26 eine Aufnahme 28 für ein mittels der Handzange 1 zu durchtrennendes Werkstück. Hierbei ist die Aufnahme 28 begrenzt durch die mit der Schneide 24 der beweglichen Schneidbacke 23 und der festen Schneidbacke 26 gebildeten Aufnahme- oder Schneidkontur 29, deren Querschnittsfläche sich über den Arbeitshub der Handzange 1 verringert und deren Geometrie sich über den Arbeitshub der Handzange 1 verändert.

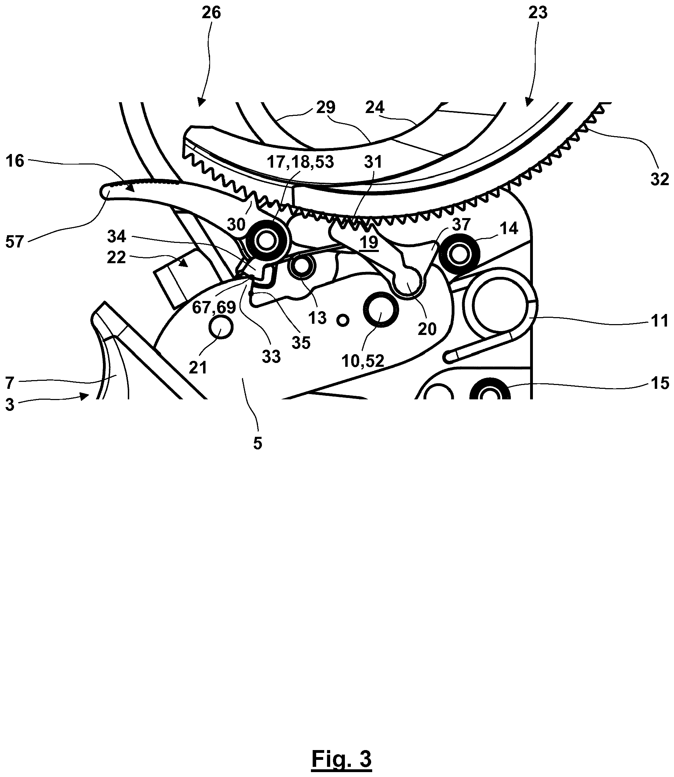

**Fig. 3** zeigt ein Detail III der Darstellung gemäß Fig. 2. Die Handzange 1 befindet sich hier in einer Ausgangsstellung, in welcher ein Werkstück, insbesondere ein Kabel, in die Aufnahme 28 eingelegt worden ist. Der Rasthebel 16 verfügt über eine Rastnase 30, welche zur Verrastung der Schwenkstellung der beweglichen Schneidbacke 23 einrastet in die Verzahnung 32 der beweglichen Schneidbacke 23. In dem dem Schwenklager 20 abgewandten Endbereich verfügt der Schubhebel 19 über eine Verzahnung 31, welche gemäß Fig. 2 eingreift in die Verzahnung 32 der beweglichen Schneidbacke 23. Die erste maximale Öffnungsstellung der Handhebel 2, 3 ist (trotz der Beaufschlagung des beweglichen Handhebels 3 durch die Öffnungsfeder 11 nach außen) dadurch vorgegeben, dass eine Nase oder ein Vorsprung 33 der Handhebelplatte 5 zur Anlage kommt an eine in grober Näherung L-förmige Abwinklung oder ein Hebelteil 34 des Rasthebels 16. In der ersten maximalen Öffnungsstellung gemäß Fig. 2 und 3 befinden sich sowohl die Rastnase 30 des Rasthebels 16 als auch die Verzahnung 31 des Schubhebels 19 in Eingriff mit der Verzahnung 32 der Schneidbacke 23.

Erfolgt durch Applikation von Betätigungskräften auf die Handhebel 2, 3 eine Bewegung der Handhebel 2, 3 in einem ersten Teilarbeitshub aufeinander zu, hat dies zur Folge, dass der Schubhebel 19 über den Eingriff der Verzahnungen 31, 32 eine Schließkraft auf die bewegliche Schneidbacke 23 aufbringt mit einer Komponente, welche in Umfangs- und Schließrichtung um die Schwenkachse des Schwenklagers 25 orientiert ist, womit eine teilweise Schließung der Schneidbacken 23, 26 erfolgt mit einer Verringerung der Querschnittsfläche der Schneidkontur 29. Somit erfolgt ein teilweises Einschneiden des in der Aufnahme 28 angeordneten Werkstücks. Während dieser Schließbewegung der beweglichen Schneidbacke 23 kann der Rasthebel 16 nach außen auffedern und die Rastnase 30 je nach Ausmaß der Bewegung der beweglichen Schneidbacke 23 über die Verzahnung 32 gleiten mit sukzessivem Eingriff in die passierten Zahnzwischenräume der Verzahnung 32. Werden hingegen die schließenden Betätigungskräfte reduziert und beseitigt und stattdessen die Handhebel 2, 3 für einen weiteren Teilarbeitshub der Handzange 1 wieder geöffnet, wird durch den Eingriff der Rastnase 30 des Rasthebels 16 in den zuletzt erreichten Zahnzwischenraum der Verzahnung 32 eine zuvor erreichte Schließstellung der Schneidbacken 23, 26 gesichert, während für diese Öffnungsbewegung der Schubhebel 16 auffedern kann und die Verzahnung 31 des Schubhebels 19 über die Verzahnung 32 der beweglichen Schneidbacke 23 gleiten kann. Somit verändert sich während der Öffnungsbewegung der Eingriffspunkt der Verzahnung 32 des Schubhebels 19 an der Verzahnung 32 der Schneidbacke 23. Für den nächsten Teilarbeitshub erfolgt dann wieder die Schließung der Handhebel 2, 3, womit (entsprechend der Erläuterung des vorangegangenen Teilarbeitshubs) der Schubhebel 19 eine weitere Schließung der Schneidbacken 23, 26 verursachen kann mit einem Gleiten der Rastnase 30 des Rasthebels 16 über die Verzahnung 32. Mehrere derartige Arbeitshübe werden sukzessive durchgeführt, bis die Schneidkontur vollständig geschlossen ist, womit ein Durchtrennen des Werkstücks erfolgt ist.

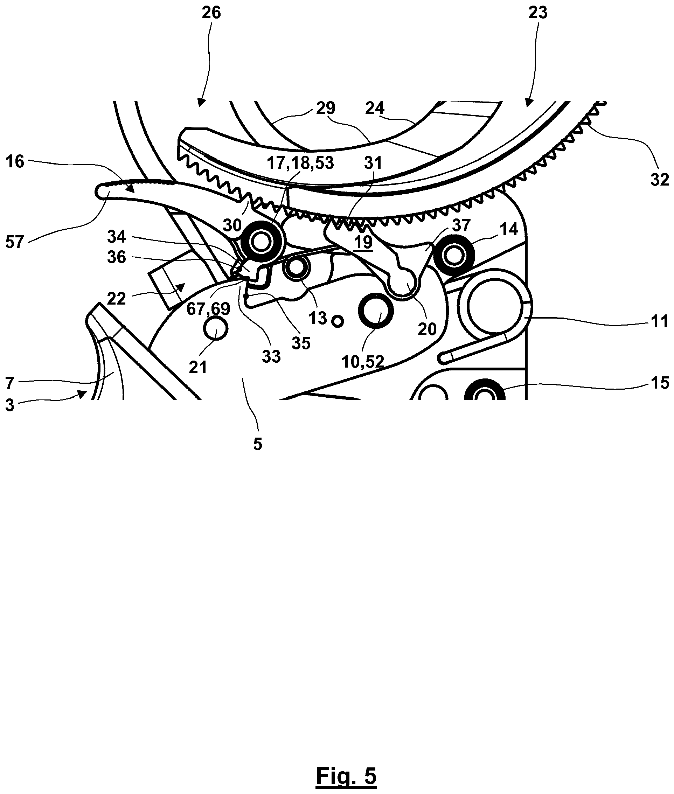

Falls es trotz Applikation großer Betätigungskräfte auf die Handhebel 2, 3 nicht möglich ist, das Werkstück vollständig zu durchtrennen, muss der Betätigungsvorgang abgebrochen werden, bevor der Arbeitshub vollständig durchlaufen worden ist. Dies führt zunächst infolge der beträchtlichen elastischen Komprimierung des Werkstücks zu einer federnden Öffnungsbewegung der Schneidbacken 23, 26, für welche grundsätzlich die Verzahnung 31 des Schubhebels 19 entlang der Verzahnung 32 gleiten kann. Eine derartige Öffnungsbewegung lässt allerdings der Rasthebel 16 nicht (oder je nach relativer Lage der Rastnase 30 zu der Verzahnung 32 nur begrenzt) zu. Vielmehr greift die Rastnase 30 des Rasthebels 16 blockierend in die Verzahnung 32 der Schneidbacke 23 ein, womit eine weitere auffedernde Öffnungsbewegung der Schneidbacken 23, 26 nicht möglich ist. Angesichts der unter Umständen hohen Anpresskraft zwischen der Rastnase und der Verzahnung 32 infolge der elastischen Auffederung des Werkstücks kann es möglich sein, dass eine einfache manuelle Betätigung des Rasthebels 16 in Öffnungsrichtung, um das weitere Öffnen der Schneidbacken 23, 26 zu ermöglichen und die Entnahme des teilgeschnittenen Werkstücks zu ermöglichen, nicht möglich. Diese Situation ist in **Fig. 5** dargestellt mit der Lösung der Verzahnung 31 des Schubhebels 19 von der Verzahnung 32 der beweglichen Schneidbacke 23, aber dem Eingriff der Rastnase 30 des Rasthebels 16 in die Verzahnung 32 der Schneidbacke 23.

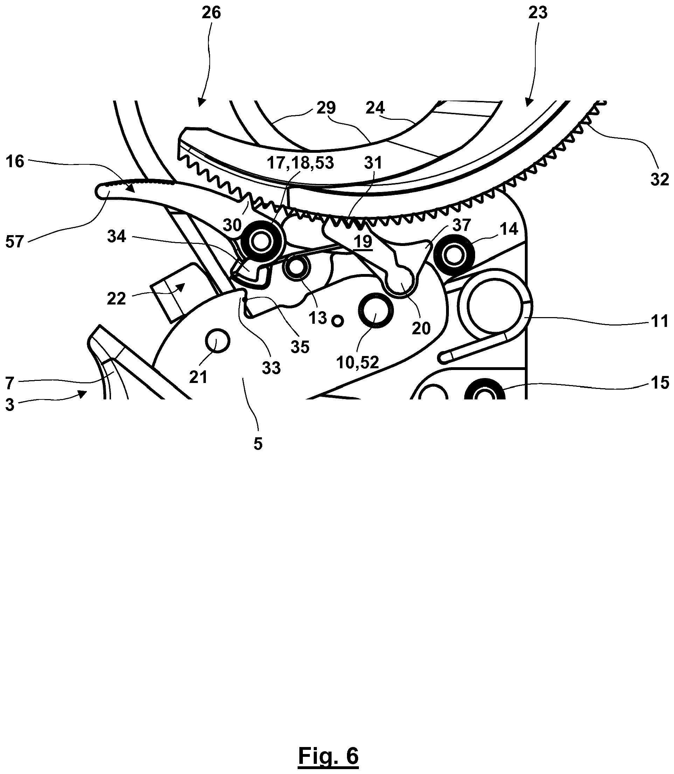

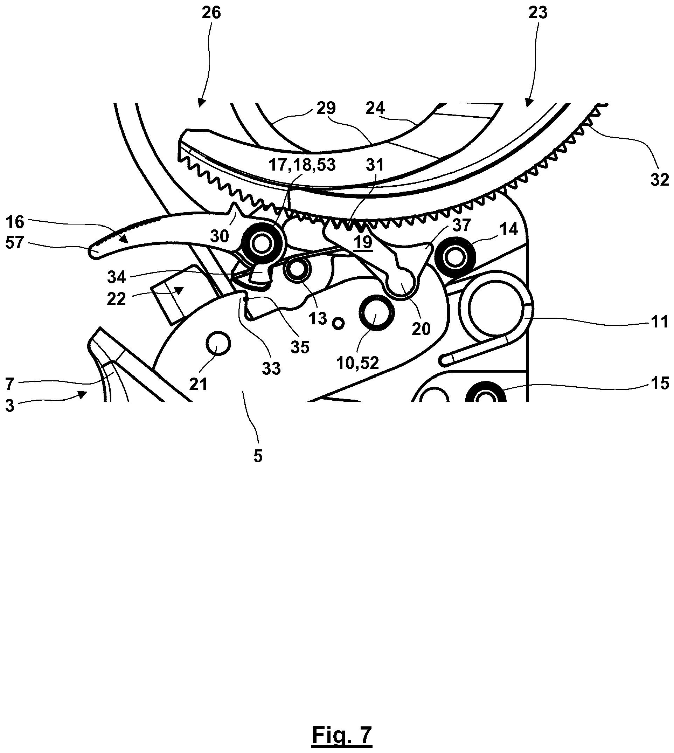

Um dennoch das Lösen des Rasthebels 16 und die weitere Öffnung der Schneidbacken 23, 26 zu ermöglichen, werden gemäß **Fig. 6** die Handhebel 2, 3 unter erneuter elastischer Komprimierung des Werkstücks geringfügig geschlossen. Dies hat zur Folge, dass der Schubhebel 19 mit seiner Verzahnung 31 nochmals in die Verzahnung 32 der Schneidbacke 23 eingreift. Mit Vergrößerung der von dem Schubhebel 19 auf die Schneidbacke 23 übertragenen Betätigungskraft erfolgt eine zunehmende Entlastung des Kontakts zwischen der Rastnase 30 des Rasthebels 16 und der Verzahnung 32 der Schneidbacke 23, womit dann auch das manuelle Lösen des Rasthebels 16 durch Verschwenkung desselben weg von der Verzahnung 32 möglich ist (**Fig. 7**). Somit kann mit betätigtem Rasthebel 16 die Öffnung der Schneidbacken 23, 26 erfolgen, womit die Entnahme des Werkstücks ermöglicht ist.

Für die Öffnung der Handhebel 2, 3 ist die maximale Öffnungsstellung aber nicht vorgegeben durch die Anlage des Vorsprungs 33 der Handhebelplatte 5 an dem Hebelteil 34 des Rasthebels 16. Vielmehr kann für betätigten Rasthebel 16 der Vorsprung 33 mit der Öffnungsbewegung des Handhebels 3 das Hebelteil 34 passieren, womit ein zweiter maximaler Öffnungswinkel ermöglicht ist, welcher größer ist als der erste maximale Öffnungswinkel gemäß Fig. 3. In der zweiten maximalen Öffnungsstellung greift dann der Vorsprung 33 der Handhebelplatte 5 hinter das Hebelteil 34. Die Öffnungsfeder 11 beaufschlagt über den Vorsprung 33 das Handhebelteil 34 in Öffnungsrichtung des Rasthebels 16, so dass in der zweiten maximalen Öffnungsstellung auch der Rasthebel 16 in einer Stellung gesichert ist, in welcher die Rastnase 30 des Rasthebels 16 nicht in Eingriff mit der Verzahnung 32 der Schneidbacke 23 ist. In dieser zweiten maximalen Öffnungsstellung kann somit ein neues Werkstück in die Aufnahme 28 eingelegt werden, wobei auch möglich ist, dass die Schneidbacken 23, 26 über einen Teilhub manuell geschlossen werden, bis sich diese an die Mantelfläche des neuen Werkstücks anlegen.

Mit einer geringfügigen Schließung der Handhebel 2, 3 ausgehend von der zweiten maximalen Öffnungsstellung gleitet die Anlagefläche 35 des Vorsprungs 33 entlang der zugeordneten Kontaktfläche 36 des Hebelteils 34 von dem Schwenkbolzen 17 weg. Hierbei hängt die Reibkraft zwischen der Anlagefläche 35 und der Kontaktfläche 36 ausschließlich ab von der Kraft der Beaufschlagungsfeder 13. Vorzugsweise ist zur Ermöglichung der erläuterten Gleitbewegung zwischen der Kontaktfläche 36 und der Anlagefläche 35 ohne damit einhergehende signifikante Verschwenkung des Rasthebels 16 die Anlagefläche 35 konzentrisch zur Schwenkachse des Schwenklagers 52 ausgebildet. Kommen am Ende dieser Gleitbewegung der Vorsprung 33 und das Hebelteil 34 außer Eingriff, so kann die Beaufschlagungsfeder 13 zur Wirkung kommen, indem diese den Rasthebel 16 in Richtung der Verzahnung 32 zur Herbeiführung des Eingriffs der Rastnase 30 verschwenkt. Gleichzeitig bildet dann die außenliegende Stirnseite 69 des Hebelteils 34 (wieder) einen Anschlag 67 für den Vorsprung 33, womit eine Begrenzung der Öffnungsstellung der Handhebel 2, 3 auf die erste maximale Öffnungsstellung erfolgt.

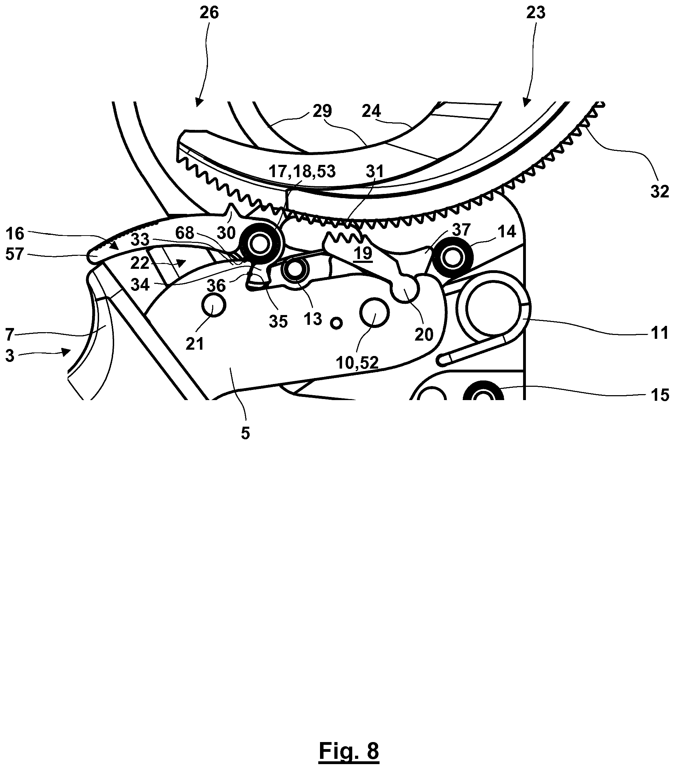

Möglich ist, dass mit der Bewegung des Handhebels 3 in die zweite maximale Öffnungsstellung nicht nur der Rasthebel 16 von der Verzahnung 32 weg verschwenkt wird. Vielmehr kann entsprechend **Fig. 8** auch in dem Teilhub von dem normalen maximalen Öffnungshub zu dem erweiterten maximalen Öffnungshub ein Fortsatz 37 des Schubhebels 19 zur Anlage kommen an eine Anlagefläche, welche mit der Verschwenkung des Handhebels 3 nicht mitbewegt wird. Für das dargestellte Ausführungsbeispiel wird diese Anlagefläche ausgebildet von dem Abstandshalter 14. Mit Herbeiführung des Kontakts zwischen dem Fortsatz 37 und dem Abstandshalter 14 führt die Verschwenkung des Handhebels 3 in Öffnungsrichtung (also in Fig. 8 im Uhrzeigersinn) dazu, dass infolge des Kontakts des Fortsatzes 37 an dem Abstandshalter 14 der Fortsatz 37 und damit der Schubhebel 19 in entgegengesetzte Richtung, also gegen den Uhrzeigersinn verschwenkt werden, so dass der Schubhebel 19 von der Verzahnung 32 weg verschwenkt wird. In der erweiterten Öffnungsstellung gemäß Fig. 8 (welche infolge der Beaufschlagung der Handhebel 2, 3 durch die Öffnungsfeder 11 selbsttätig aufrechterhalten wird) befinden sich somit sowohl der Rasthebel 16 als auch der Schubhebel 19 in einer gesicherten Stellung, in welcher diese nicht in Eingriff stehen mit der Verzahnung 32 der Schneidbacke 23. Es ist somit möglich, die Schneidbacke 23 frei zu verschwenken. Dies kann dazu genutzt werden, dass nach dem Einlegen des Werkstücks in die maximal geöffneten Schneidbacken 23, 26 manuelle ohne Betätigung der Handhebel 2, 3 die Schneidbacken manuell aufeinander zu verschwenkt werden, bis diese an der Mantelfläche des Werkstücks anliegen. Erst in dieser Stellung erfolgt dann die Betätigung der Handhebel 2, 3 mit der Herbeiführung des Eingriffs des Rasthebels 16 und/oder des Schubhebels 19 in die Verzahnung 32 der Schneidbacke 23. Dies hat den Vorteil, dass mit dem Beginn des eigentlichen Arbeitshubs der Handzange 1 kein Leerhub durch Schließung der Handhebel 2, 3, bis die Schneidbacken 23, 26 an der Mantelfläche des Werkstücks anliegen, erforderlich ist, womit die Zahl der erforderlichen Teilarbeitshübe reduziert werden kann.

Sind die Handhebel 2, 3 geschlossen, kann der Feststellhebel 22 derart um das Schwenklager 21 nach innen verschwenkt werden, dass dieser formschlüssig eingreift in eine hier nicht dargestellte Ausnehmung der Schneidbacke 23, womit eine Lagefixierung des Handhebels 3 erfolgt. Dies ist vorteilhaft für die kompakte Bevorratung der Handzange mit geschlossenen Handhebeln 2, 3, bspw. in einer Werkzeugkiste.

Je nachdem, ob
- eine Antriebskopplung der Handhebel 2, 3 mit den Schneidbacken 23, 26 besteht, eine Begrenzung auf die erste maximale Öffnungsstellung (vgl. Fig. 3) erfolgt, ein Eingriff der Rastnase 30 des Rasthebels 16 in die Verzahnung 32 der Schneidbacke erfolgt und/oder der Rasthebel 16 manuell betätigt worden ist (im Folgenden "Lade- und Entnahmestellung")
oder
- keine Antriebskopplung der Handhebel 2, 3 mit den Schneidbacken 23, 26 besteht, eine Begrenzung auf die zweite maximale Öffnungsstellung (vgl. Fig. 8) erfolgt, kein Eingriff der Rastnase 30 des Rasthebels 16, der Verzahnung 31 des Schubhebels 19 in die Verzahnung 32 der Schneidbacke erfolgt und/oder der Rasthebel 16 nicht manuell betätigt worden ist (im Folgenden "Betriebsstellung")
sind unterschiedliche Anschläge 67, 68 und Kontaktflächen für die Handhebelplatte 5 wirksam:
- In der Lade- und Entnahmestellung presst die Öffnungsfeder 11 den Handhebel 3 mit der Anlagefläche 34 des Vorsprungs 33 gegen die Kontaktfläche 36 des Hebelteils 34, wobei auch möglich ist, dass der Vorsprung 33 stirnseitig an dem Schwenkbolzen 17 bzw. Abstandshalter 18 anliegt, womit der Schwenkbolzen 17 einen Anschlag 68 bildet. Hierdurch wird die Lade- und Entnahmestellung oder die zweite maximale Öffnungsstellung gesichert.
- Hingegen presst in der Betriebsstellung zu Beginn des Arbeitsvorgangs die Öffnungsfeder 11 den Vorsprung 33 des Handhebels 3 an die außenliegende Stirnseite 69 des Hebelteils 34 an, womit die Begrenzung des ersten maximalen Öffnungswinkels erfolgt.

Für Handzangen gemäß dem Stand der Technik, vgl. bspw. DE 43 03 180 C1, erfolgt die Schließung der Handhebel durch Bewegung des beweglichen Handhebels im Uhrzeigersinn, womit auch die bewegliche Schneidbacke mit gleichem Richtungssinn, also hier auch im Uhrzeigersinn, betätigt wird. Hingegen erfolgt für die hier dargestellte Ausführungsform die Bewegung des beweglichen Handhebels 3 im Uhrzeigersinn mit hiermit einhergehender Bewegung der beweglichen Schneidbacke 23 entgegen dem Uhrzeigersinn. Dies ist dadurch bedingt, dass für den genannten Stand der Technik das Schwenklager für den Schubhebel 19 zwischen dem Schwenklager 10 für die Anlenkung des Handhebels 3 und dem Handgriff 7 angeordnet ist, während für die hier dargestellte Ausführungsform das Schwenklager 10 für die Anlenkung des Handhebels 3 zwischen dem Schwenklager 20 für die Anlenkung des Schubhebels 19 und dem Handgriff 7 angeordnet ist. Dies hat zur Folge, dass gemäß dem Stand der Technik die auf den Schubhebel 19 von der Verzahnung ausgeübte Schubhebelkraftkomponente, welche ein Moment um das Schwenklager 52 erzeugt, entgegengesetzt orientiert ist zu der von dem Benutzer auf den Handhebel 3 aufgebrachten Betätigungskraftkomponente, welche um das Schwenklager 52 wirkt. Hingegen besitzt für die hier dargestellte Ausführungsform die auf den Schubhebel 19 von der Verzahnung ausgeübte Schubhebelkraftkomponente 55, welche ein Moment um das Schwenklager 52 erzeugt, denselben Richtungssinn wie die von dem Benutzer auf den Handhebel 3 aufgebrachte Betätigungskraftkomponente 56, welche um das Schwenklager 52 wirkt. Während für aus dem Stand der Technik bekannte Ausführungsformen der bewegliche Handhebel hinsichtlich des Schwenklagers für die Anlenkung des beweglichen Handhebels an dem festen Handhebel lediglich einen Schwenkarm bildet, an welchem sowohl die Betätigungskraftkomponente als auch die Schubhebelkraftkomponente auf derselben Seite des Schwenklagers angreifen, bildet für das dargestellte Ausführungsbeispiel der Handhebel 3 bzw. die Handhebelplatte 5 auf beiden Seiten des Schwenklagers 52 Hebelteile aus, wobei an einem Hebelteil der Schubhebel 19 angelenkt ist, so dass hierauf die Schubhebelkraftkomponente 55 wirkt, während auf das andere Hebelteil die Betätigungskraftkomponente 56 wirkt.

Der Rasthebel 16 bildet unmittelbar und integral ein Betätigungsorgan 57 aus, bei welchem es sich insbesondere um den aus dem Zangenkopf herausragenden, von außen zugänglichen Endbereich des Rasthebels 16 handelt. Somit erfolgt das Entriegeln des Rasthebels 16 nicht über weitere Bauelement und/oder eine zwischengeschaltete getriebliche Verbindung.

Ein Fußpunkt der Beaufschlagungsfeder 13 beaufschlagt den Schubhebel 19 in Richtung der Verzahnung 32 der beweglichen Schneidbacke 23, während der andere Fußpunkt der Beaufschlagungsfeder 13 den Rasthebel 16 in Richtung der Verzahnung 32 der beweglichen Schneidbacke 23 beaufschlagt, womit die Beaufschlagungsfeder 13 multifunktional eingesetzt ist.

Erfindungsgemäß finden einerseits die multifunktionale Beaufschlagungsfeder 13 zur Beaufschlagung sowohl des Rasthebels 16 als auch des Schubhebels 19 sowie andererseits eine separate Öffnungsfeder 11 für die Beaufschlagung der Handhebel 2, 3 in Öffnungsrichtung Einsatz.

Die Öffnungsfeder 11 erzeugt in der Öffnungsstellung gemäß Fig. 3 eine Kontaktkraft, mit welcher der Vorsprung 33 in Richtung des Schwenkbolzens 17 an die außenliegende Stirnseite 69 des Hebelteils 34 des Rasthebels 16 gepresst wird. Die Stirnseite 69 des Hebelteils 34 bildet somit einen Anschlag 67 für den Handhebel 3 oder die Handhebelplatte 5. Für die Herbeiführung der Lade- und Entnahmestellung, also einer Entriegelung des Rasthebels 16, erfolgt eine Verschwenkung des Rasthebels 16 in Richtung des Handgriffs 7, also von dem Zangenkopf weg. Vorzugsweise kann die Schwenkbewegung für die Entriegelung des Rasthebels 16 mit dem Daumen herbeigeführt werden, während die übrige Hand des Benutzers weiterhin an dem Handhebel 3 oder sogar an beiden Handhebeln 2, 3 anliegt. Die radiale Erstreckung des Hebelteils 34, also der Abstand der radial außenliegenden Stirnseite 69 des Hebelteils 34 von der Mantelfläche des Schwenkbolzens 17 gibt den Unterschied zwischen der ersten maximalen Öffnungsstellung und der zweiten maximalen Öffnungsstellung vor.

Die Verschwenkung der beweglichen Schneidbacke 23 und des beweglichen Handhebels 3 bzw. der Handhebelplatte 5 erfolgt vorzugsweise in derselben Ebene, welche zwischen den beiden Gehäuseplatten 9, 27 angeordnet ist. Vorzugsweise erfolgt in dieser Ebene auch die Verschwenkung des Rasthebels 16 und des Schubhebels 19. Für sämtliche möglichen Schwenkwinkel der Handhebelplatte 5 ergibt sich keinerlei Überlappung einerseits der Handhebelplatte 5 und der mit dieser bewegten Komponenten und andererseits der beweglichen Schneidbacke 23 bei Blickrichtung vertikal zur Zangenkopfebene.

Die Handzange 1 ist zwecks Reduzierung der Bauteilvielfalt, Vereinfachung der Bevorratung und Herstellung modular oder in einem Baukastenprinzip hergestellt. Hierbei ist die Handzange 1 mit einem Zangenkopfmodul 38, einem Getriebemodul 39 und mindestens einem Handhebelmodul 40 gebildet.

Das Getriebemodul 39 verfügt über die Getriebeelemente wie den Rasthebel 16, den Schubhebel 19 und zumindest den das Schwenklager 20 ausbildenden Teil der Handhebelplatte 5, die Abstandshalter 14, 15, 18 und/oder die Schwenkbolzen 10, 17 und/oder den Bolzen 12, welche verliersicher hieran gehalten sein können oder auch lediglich lose hiermit verbunden sein können vor der Verbindung des Getriebemoduls 39 mit anderen Modulen. Das Getriebemodul 39 ist hierbei nicht auf beiden Seiten der Zangenkopfebene geschlossen ausgebildet, sondern vielmehr lediglich einseitig durch die Gehäuseplatte 9 begrenzt, während die vorgenannten Bauelemente des Getriebemoduls 39 von der anderen Seite über eine Öffnung 63 frei zugänglich sind. Vorzugsweise sind die Abstandshalter 14, 15, 18, der Bolzen 12, der Schwenkbolzen 10 sowie der Schwenkbolzen 17 lediglich in einem ihrer Endbereiche in der Gehäuseplatte 9 aufgenommen, gelagert oder gehalten, während hieran die vorgenannten anderen Bauelemente abgestützt sein können und der andere Endbereich vor der Montage des Zangenkopfmoduls 38 noch frei ist.

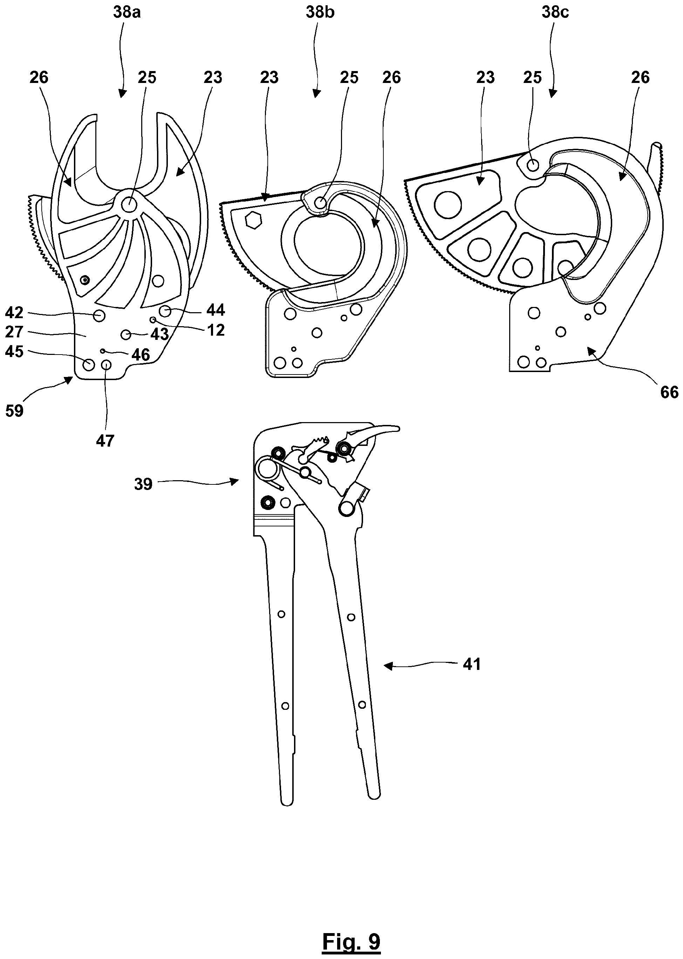

Gemäß **Fig. 9** bildet das Getriebemodul 39 integral auch die Handhebelplatte 4 aus und auch die Handhebelplatte 5 erstreckt sich einstückig in das Getriebemodul 39, womit ein Grundmodul 41 gebildet ist. Das Grundmodul 41 stellt einerseits die Tragelemente für die Handgriffe 6, 7 bereit und andererseits die Gehäuseplatte 9 sowie die daran gehaltenen Bauelemente des Getriebemoduls 39.

Gemäß Fig. 9 kann dasselbe Grundmodul 41 herstellerseitig wahlweise kombiniert werden mit den unterschiedlichen Zangenkopfmodulen 38a, 38b, 38c. Hierzu sind keinerlei Anpassungen der Bauelemente des Getriebemoduls 39 oder Grundmoduls 41 erforderlich, insbesondere keine Form- oder Konturänderung, kein Austausch von Bauelementen und/oder keine Anpassung von Bohrungsdurchmessern oder die Anpassung eines Bohrbilds.

Bei dem Zangenkopfmodul 38a handelt es sich um ein sogenanntes Frontschneide-Zangenkopfmodul, bei welchem die von den Schneidbacken 23, 26 gebildete Aufnahme 28 nicht in Umfangsrichtung geschlossen ist, sondern (bspw. U-förmig oder V-förmig) offen ist. Hingegen handelt es sich bei den Zangenkopfmodulen 38b, 38c um Umschlingungs-Zangenkopfmodule, bei welchen die Schneidbacken 23, 26 eine Aufnahme 28 begrenzen, welche zu Beginn des Arbeitshubs und während des gesamten Arbeitshubs in Umfangsrichtung geschlossen ist. Hierbei unterscheiden sich die Zangenkopfmodule 38b, 38c hinsichtlich der Größe der Schneidbacken 23, 26, der gebildeten Aufnahme 28, der Schneidkontur 29 und hinsichtlich der mit den Zangenkopfmodulen 38b, 38c zu bearbeiteten Werkstücken und Geometrien derselben.

Gemäß Fig. 9 verfügen die Zangenkopfmodule 38a, 38b, 38c jeweils über eine Gehäuseplatte 27, welche dieselben Bohrungen an denselben Stellen, mit denselben relativen Lagen und denselben Durchmessern besitzen. Diese Bohrungen werden beispielhaft anhand des Zangenkopfmoduls 38a erläutert, wobei dies entsprechend für die Zangenkopfmodule 38b, 38c gilt:

Eine Bohrung 42 dient der Aufnahme des Abstandshalters 14. Eine Bohrung 43 dient der Aufnahme des Schwenkbolzens 10. Eine Bohrung 44 dient der Aufnahme des Schwenkbolzens 17 oder Abstandshalters 18, während eine benachbarte Bohrung 45 der Aufnahme des Bolzens 12 dient. Eine weitere, im unteren Endbereich der Gehäuseplatte angeordnete Bohrung 45 dient der Aufnahme des Abstandshalters 15. Eine weitere Bohrung 46 dient der Aufnahme eines Endbereichs eines Fußpunktes der Öffnungsfeder 11, hier eines Schenkels der Spiral- oder Schenkelfeder.

Für die Montage des jeweiligen Zangenkopfmoduls 38a, 38b, 38c wird dieses an das Grundmodul 41 von der offenen Seite des Getriebemoduls 39 bei Ausrichtung parallel zu der Gehäuseplatte 9 des Getriebemoduls 39 an dieses angenähert, bis die Endbereiche des Schwenkbolzens 17, Abstandshalters 18, Bolzens 12, Schwenkbolzens 10, Abstandshalters 14, der Öffnungsfeder 11 und des Abstandshalters 15 in die zugeordneten Bohrungen 42 bis 46 eingetreten sind. Eine Fixierung kann durch Verpressen oder zusätzliche Sicherungsmaßnahmen, bspw. Aufweiten, Verschrauben u. ä. erfolgen. Die Endstellung der Gehäuseplatten 9, 27 mit einem vorgegebenen Abstand der Gehäuseplatten 9, 27 voneinander wird dabei vorgegeben durch die Abstandshalter 14, 15, 18. Mit dieser Montage der Gehäuseplatte 27 sind dann in jedem Fall die Bauelemente zwischen den Gehäuseplatten 9, 27 verliersicher gefangen, wobei die bewegten Bauelemente dann zwischen den Gehäuseplatten 9, 27 geführt sein können und die beiden Endbereiche des Schwenkbolzen 17, Abstandshalters 18, Bolzens 12, Schwenkbolzens 10, Abstandshalters 14 und Abstandshalters 15 jeweils in einer Gehäuseplatte 9, 27 gehalten sind.

Vorzugsweise kann die Gehäuseplatte 27 des Zangenkopfmoduls 38 mit einer zusätzlichen Bohrung 47 ausgestattet sein, welche für den Anwendungsfall gemäß Fig. 9 ohne Funktion ist.

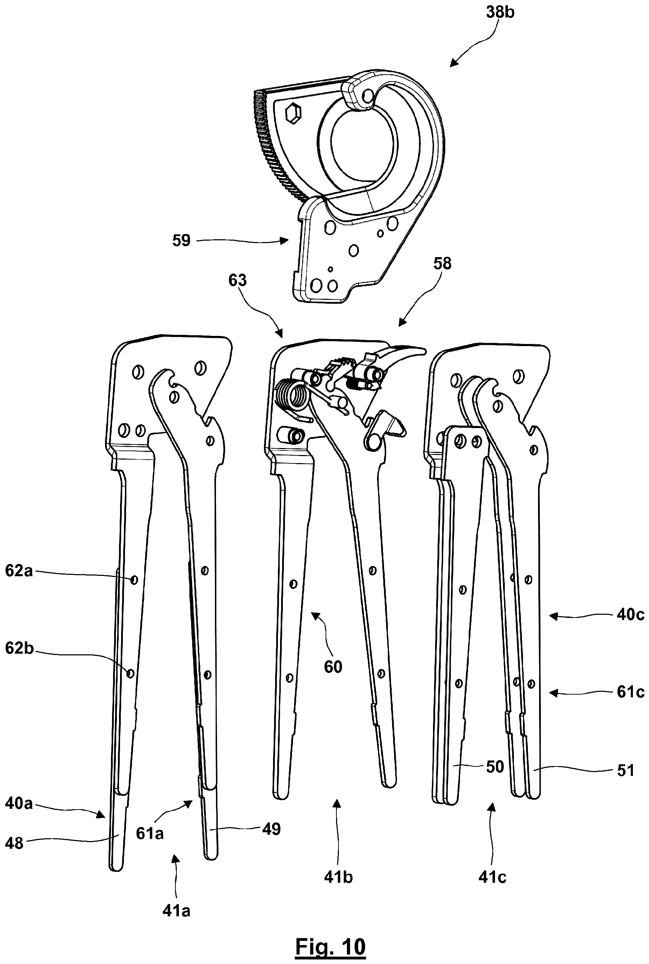

Gemäß **Fig. 10** kann die Kombination eines Zangenkopfmoduls 38b (und entsprechend auch anderer Zangenkopfmodule 38a, 38c) mit unterschiedlichen Grundmodulen 41a, 41b, 41c erfolgen, wobei diese Grundmodule 41a, 41b, 41c vorzugsweise über identische Getriebemodule 39 und insbesondere identische Gehäuseplatten 9 mit identischen Bohrbildern und Bohrungsdurchmessern sowie identischen Getriebeelementen wie Rasthebel 16 und Schubhebel 19 verfügen. Zwecks Vereinfachung der Darstellung sind die Abstandshalter, Rasthebel, Schubhebel, Schwenkbolzen und die unterschiedlichen Federn sowie der Feststellhebel lediglich für das Grundmodul 41b dargestellt, obwohl diese auch für die Grundmodule 41a, 41c identisch vorhanden sind.

Das Grundmodul 41a verfügt gegenüber dem Grundmodul 41b über Handhebelverlängerungen 48, 49, bei welchen es sich um plattenartige Verlängerungen handelt, welche teilweise mit den Handhebelplatten 4, 5 überlappen und mit diesen verbunden sind, insbesondere über ein Vernieten, Verschrauben, stoffschlüssiges Verbinden u. ä. Hingegen sind für das Grundmodul 41c im Bereich der Handhebel 2, 3 Verstärkungen 50, 51 vorgesehen, welche sich im Bereich der Handhebel 2, 3 parallel zu den Handhebelplatten 4, 5 erstrecken und welche, auf Abstand gehalten, von den Handhebelplatten 4, 5 getragen werden. Hierzu stützt sich die Verstärkung 50 in dem dem Getriebemodul 39 zugewandten Endbereich über den Abstandshalter 15 an der Gehäuseplatte 9 ab. Zusätzlich findet ein weiterer, hier nicht dargestellter Abstandshalter Einsatz, welcher Aufnahme findet in der Bohrung 47 der Gehäuseplatte 27 und einer entsprechenden Bohrung der Verstärkung 50. Eine zusätzliche Befestigung, insbesondere Verschraubung, Vernietung oder stoffschlüssige Verbindung kann, insbesondere unter Verwendung von zusätzlichen Abstandshaltern, im Bereich der Handgriffe 2, 3 erfolgen. Das Entsprechende gilt für die Verbindung zwischen der Verstärkung 51 mit der Handhebelplatte 5, wobei hier auch eine Verbindung zwischen der Verstärkung 51 und der Handhebelplatte 5 durch den Schwenkbolzen 10 und einen Schwenkbolzen zwecks Bildung des Schwenklagers 21 erfolgen kann.

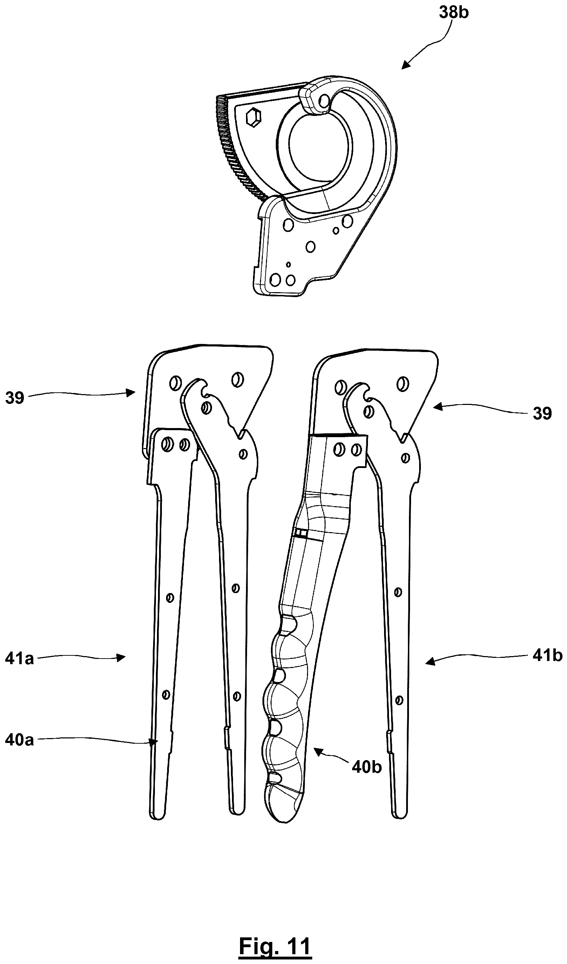

Während für die zuvor erläuterten Ausführungsbeispiele die Gehäuseplatte 9 und die Handhebelplatte 4 einstückig ausgebildet waren, zeigt **Fig. 11** eine Ausführungsform, bei welcher diese separat voneinander ausgebildet sind, womit die Gehäuseplatte 9 Bestandteil des Getriebemoduls 39 ist, während die Handhebelplatte 4 Bestandteil eines Handhebelmoduls 40 ist. Hierbei zeigt Fig. 11 unterschiedliche Handhebelmodule 40a, 40b, welche wahlweise mit einem Getriebemodul 39 verbunden werden können. Auch hier erfolgt die Verbindung sowohl über den Abstandshalter 15 als auch über einen weiteren Abstandshalter, welcher sich durch die Bohrung 47 erstreckt. Ein derartiges, mit dem Handhebelmodul 40a, 40b und dem Getriebemodul 39 gebildetes Grundmodul 41 kann dann wahlweise mit einem Zangenkopfmodul 38b (oder auch 38a, 38c) montiert werden. Das Handhebelmodul 40b verfügt über eine Konfigurierung, welche Griffmulden für die Finger der Hand des Benutzers der Handzange 1 aufweist.

In von dem Zangenkopfmodul 38 demontiertem Zustand bildet das Getriebemodul 39 eine Schnittstelle 58 aus, über welche das Getriebemodul 39 mit einer entsprechenden Gegen-Schnittstelle 59 eines Zangenkopfmoduls 38 montiert werden kann, welche hier von der Gehäuseplatte 27 ausgebildet wird. Hierbei ist die Schnittstelle 58 des Getriebemoduls 39 vorzugsweise gebildet mit den freien Endbereichen der Abstandshalter 14, 15, 18, des Schwenkbolzens 10 sowie des Bolzens 12. Hingegen ist die Gegen-Schnittstelle 59 gebildet mit den Bohrungen 42 bis 47. Entsprechend besitzen die Getriebemodule 39 auch Schnittstellen 60, über welche diese mit identischen Gegen-Schnittstellen 61 unterschiedlicher Handhebelmodule 40a, 40b, 40c gekoppelt werden können. Hierbei werden die Schnittstellen 60 gebildet von Bohrungen und/oder dem Abstandshalter 15, sowie weiteren Bohrungen 62, an welchen die Handhebelmodule 40a, 40b, 40c montiert werden können.

Die Gehäuseplatte 27 des Zangenkopfmoduls 38 ist vorzugsweise einstückig mit der festen Schneidbacke 26 ausgebildet. Vorzugsweise besteht das Zangenkopfmodul 38 ausschließlich aus einem mit der Gehäuseplatte 27 und der festen Schneidbacke 26 gebildeten Grundkörper 66, welcher insbesondere eben ausgebildet ist, der beweglichen Schneidbacke 23 und den Bauelementen, welche zur Ausbildung des Schwenklagers 25 erforderlich sind. Vorzugsweise ist der Grundkörper 66, welcher die Schneidbacke 26 und die Gehäuseplatte 27 ausbildet, als Feingussteil ausgebildet. Für weitere Bauelemente, insbesondere die Handhebelplatten 4, 5 mit der Gehäuseplatte 9, kann eine Herstellung durch Stanzen erfolgen.

Für die Ausführungsformen gemäß Fig. 10 kann grundsätzlich dieselbe Handzange 1 einerseits lediglich mit einer Handhebelplatte je Handhebel und andererseits mit gedoppelten Handhebelplatten je Handhebel ausgebildet sein, wobei die letztgenannte Ausführungsform eine Handzange 1 mit erhöhter Steifigkeit und Festigkeit bereitstellt.

In einer Draufsicht gemäß Fig. 2 und vertikal zur Zangenkopfebene teilt das Schwenklager 52 und eine hierdurch verlaufende Längsachse 64 die Handzange 1 in eine rechte Halblängsebene sowie eine linke Halblängsebene 65. Der Handgriff 7 des beweglichen Handhebels 3 und der Rasthebel 16 einschließlich dessen Lagerung im Bereich des Schwenklagers 53 sind hierbei in derselben Halblängsebene 65 angeordnet. Wird der Handhebel 3 für eine Öffnung der Handhebel 2, 3 in Fig. 3 im Uhrzeigersinn verschwenkt, korreliert dies mit einer Verschwenkung des Rasthebels 16 zum Entrasten desselben aus der Verzahnung 32 gegen den Uhrzeigersinn. Das Betätigungsorgan 57 des Rasthebels 16 und der Handgriff 7 des beweglichen Handhebels 3 sind auf derselben Seite der Handzange 1 angeordnet.

Eine Handzange 1 des vorliegenden Typs wird an anderer Stelle auch als "Ratschenschneider" bezeichnet.

In Vorschubrichtung des Schubhebels 19 greift die Rastnase 30 des Rasthebels 16 vor dem Schubhebel 19 in die Verzahnung 32 der beweglichen Schneidbacke ein.

Der Rasthebel 16 verfügt neben dem Hebelteil 34 über ein längeres Hebelteil, dessen dem Schwenklager 53 abgewandter Endbereich das Betätigungsorgan 57 ausbildet. An diesem Hebelteil ist die Rastnase 30 zwischen dem Schwenklager 53 und dem Betätigungsorgan 57 ausgebildet. Dieses Hebelteil bildet mit dem Hebelteil 34 ungefähr einen rechten Winkel.

Für das dargestellte Ausführungsbeispiel verfügt der Rasthebel 16 ausschließlich über eine Rastnase 30. In Abwandlung kann der Rasthebel 16 auch mit einer Rastverzahnung ausgebildet sein, welche in die Verzahnung 32 der beweglichen Schneidbacke 23 eingreift.

Zwischen die Handhebel 2, 3 und die Schneidbacken 23, 26 ist ein Getriebe zwischengeordnet, welches als parallel zueinander im Kraftfluss angeordnete Getriebeelemente den Schubhebel 19 und den Rasthebel 16 aufweist. Das Getriebe ist seitlich offen und in montiertem Zustand quer zur Zangenkopfebene jeweils in eine Richtung durch eine Gehäuseplatte 9, 27 begrenzt. Hingegen ist das Getriebemodul 39 ohne hieran montiertes Zangenkopfmodul 38 quer zur Zangenkopfebene nur in eine Richtung durch die Gehäuseplatte 9 begrenzt.

### BEZUGSZEICHENLISTE

- 1: Handzange
- 2: fester Handhebel
- 3: beweglicher Handhebel
- 4: Handhebelplatte
- 5: Handhebelplatte
- 6: Handgriff
- 7: Handgriff
- 8: Kröpfung
- 9: Gehäuseplatte
- 10: Schwenkbolzen
- 11: Öffnungsfeder
- 12: Bolzen
- 13: Beaufschlagungsfeder
- 14: Abstandshalter
- 15: Abstandshalter
- 16: Rasthebel
- 17: Schwenkbolzen
- 18: Abstandshalter
- 19: Schubhebel
- 20: Schwenklager
- 21: Schwenklager
- 22: Feststellhebel
- 23: bewegliche Schneidbacke
- 24: Schneide
- 25: Schwenklager
- 26: feste Schneidbacke
- 27: Gehäuseplatte
- 28: Aufnahme
- 29: Schneidkontur
- 30: Rastnase
- 31: Verzahnung Schubhebel
- 32: Verzahnung Schneidbacke
- 33: Vorsprung
- 34: Hebelteil
- 35: Anlagefläche
- 36: Kontaktfläche
- 37: Fortsatz
- 38: Zangenkopfmodul
- 39: Getriebemodul
- 40: Handhebelmodul
- 41: Grundmodul
- 42: Bohrung
- 43: Bohrung
- 44: Bohrung
- 45: Bohrung
- 46: Bohrung
- 47: Bohrung
- 48: Handhebelverlängerung
- 49: Handhebelverlängerung
- 50: Verstärkung
- 51: Verstärkung
- 52: Schwenklager
- 53: Schwenklager
- 54: Schwenkbolzen
- 55: Schubhebelkraftkomponente
- 56: Betätigungskraftkomponente
- 57: Betätigungsorgan
- 58: Schnittstelle
- 59: Gegen-Schnittstelle
- 60: Schnittstelle
- 61: Gegen-Schnittstelle
- 62: Bohrung
- 63: Öffnung
- 64: Längsachse
- 65: Halblängsebene
- 66: Grundkörper
- 67: Anschlag
- 68: Anschlag
- 69: Stirnseite

## Patentansprüche

1. Handzange (1) mit einer festen Schneidbacke (26) und einer beweglichen Schneidbacke (23), die eine Verzahnung (32) aufweist, wobei
a) die Verzahnung (32)
aa) zur Erzeugung einer Schließbewegung der Schneidbacken (23, 26) mit einem über einen beweglichen Handhebel (3) bewegten Schubhebel (19) in Eingriff bringbar ist und
ab) zur Sicherung einer erreichten Stellung der Schneidbacken (23, 26) mit einem Rasthebel (16) in Eingriff bringbar ist,
b) die Handzange (1)
ba) eine erste maximale Öffnungsstellung, in welcher der Rasthebel (16) und/oder der Schubhebel (19) in Eingriff mit der Verzahnung (32) der beweglichen Schneidbacke (23) stehen/steht oder bringbar sind/ist, und
bb) eine zweite maximale Öffnungsstellung, in welcher ein Öffnungswinkel der Handhebel (2, 3) größer ist als in der ersten maximalen Öffnungsstellung und in welcher der Rasthebel (16) und/oder der Schubhebel (19) nicht in Eingriff mit der Verzahnung (32) der beweglichen Schneidbacke (23) stehen/steht,
aufweist,
c) die erste maximale Öffnungsstellung durch einen von dem Rasthebel (16) ausgebildeten Anschlag (67) vorgegeben ist, an welchem in der ersten maximalen Öffnungsstellung der bewegliche Handhebel (3) anliegt, und
d) die zweite maximale Öffnungsstellung durch einen von dem Rasthebel (16) oder einem Schwenklager (53) des Rasthebels (16) ausgebildeten Anschlag (68) vorgegeben ist, an welchem in der zweiten maximalen Öffnungsstellung der bewegliche Handhebel (3) anliegt.

2. Handzange (1) nach Anspruch 1, **dadurch gekennzeichnet, dass** der bewegliche Handhebel (3) in der ersten maximalen Öffnungsstellung und in der zweiten maximalen Öffnungsstellung durch dieselbe Öffnungsfeder (11) gegen den jeweiligen Anschlag (67; 68) beaufschlagt ist.

3. Handzange (1) nach einem der vorhergehenden Ansprüche, **dadurch gekennzeichnet, dass** der Rasthebel (16) in einem Endbereich ein aus dem Zangenkopf herausragendes Betätigungsorgan (57) ausbildet.

4. Handzange (1) nach einem der vorhergehenden Ansprüche, **dadurch gekennzeichnet, dass** ein Handgriff (7) des beweglichen Handhebels (3) und der Rasthebel (16) in derselben Halblängsebene (65) der Handzange (1) angeordnet sind.

5. Handzange (1) nach einem der vorhergehenden Ansprüche, **dadurch gekennzeichnet, dass** der Rasthebel (16) in Vorschubrichtung des Schubhebels (19) vor dem Schubhebel (19) mit der Verzahnung (32) der beweglichen Schneidbacke (23) in Eingriff steht.

6. Handzange (1) nach einem der vorhergehenden Ansprüche, **dadurch gekennzeichnet, dass**
a) der Rasthebel (16) und der Schubhebel (19) über eine Beaufschlagungsfeder (13) in Richtung der Verzahnung (32) der beweglichen Schneidbacke (23) beaufschlagt sind und/oder
b) eine oder die separat von der Beaufschlagungsfeder (13) ausgebildete Öffnungsfeder (11) eine auf den beweglichen Handhebel (3) wirkende Öffnungskraft erzeugt.

7. Handzange (1) nach einem der vorhergehenden Ansprüche, **dadurch gekennzeichnet, dass** der Anschlag (67) zur Vorgabe der ersten maximalen Öffnungsstellung von einer Stirnseite (69) eines Hebelteils (34) des Rasthebels (16) ausgebildet ist und das Hebelteil (34) eine seitliche Kontaktfläche (36) ausbildet, an welcher in der zweiten maximalen Öffnungsstellung eine Anlagefläche (35) des beweglichen Handhebels (3) anliegt.

8. Handzange (1) nach Anspruch 7, **dadurch gekennzeichnet, dass** ein Vorsprung (33) des beweglichen Handhebels (3) die Anlagefläche (35) ausbildet.

9. Handzange (1) nach einem der vorhergehenden Ansprüche, **dadurch gekennzeichnet, dass** eine Rastnase (30) oder Rastverzahnung des Rasthebels (16) zwischen einem Schwenklager (53) des Rasthebels (16) und einem oder dem Betätigungsorgan (57) des Rasthebels (16) angeordnet ist.

10. Handzange (1) nach einem der vorhergehenden Ansprüche, **dadurch gekennzeichnet, dass** der Schubhebel (19) bewegungsgesteuert durch die Bewegung des beweglichen Handhebels (3) von der ersten maximalen Öffnungsstellung in Richtung der zweiten maximalen Öffnungsstellung außer Eingriff mit der Verzahnung (32) der beweglichen Schneidbacke (23) gebracht wird.

## Claims

1. Hand pliers (1) comprising a fixed cutting jaw (26) and a movable cutting jaw (23) which comprises a toothing (32),
a) wherein
aa) it is possible to bring the toothing (32) into engagement with a pushing lever moved by a movable hand lever (3) for generating a closing movement of the cutting jaws (23, 26) and
ab) it is possible to bring the toothing (32) into engagement with a latching lever (16) for securing a reached position of the cutting jaws (23, 26),
b) wherein the hand pliers (1) comprise
ba) a first maximum opening position wherein the latching lever (16) and/or the pushing lever (19) engage/engages or can be brought into engagement with the toothing (32) of the movable cutting jaw (23) and
bb) a second maximum opening position wherein an opening angle of the hand levers (2, 3) is larger than in the first maximum opening position and wherein the latching lever (16) and/or the pushing lever (19) do/does not engage the toothing (32) of the movable cutting jaw (23),
c) the first maximum opening position being defined by a stop (67) formed by the latching lever (16) which is contacted by the movable hand lever (3) in the first maximum opening position and
d) the second maximum opening position being defined by a stop (68) formed by the latching lever (16) or by a pivot joint (53) of the latching lever (16), the stop (68) being contacted by the movable hand lever (3) in the second maximum opening position.

2. Hand pliers (1) according to claim 1, **characterized in that** in the first maximum opening position and in the second maximum opening position the movable hand lever (3) is biased by one and the same opening spring (11) against the respective stop (67; 68).

3. Hand pliers (1) according to one of the preceding claims, **characterized in that** in one end region the latching lever (16) forms an actuation means (57) which protrudes from the pliers head.

4. Hand pliers (1) according to one of the preceding claims, **characterized in that** a handle (7) of the movable hand lever (3) and the latching lever (16) are arranged in the same half longitudinal plane (65) of the hand pliers (1).

5. Hand pliers (1) according to one of the preceding claims, **characterized in that** the latching lever (16) engages with the toothing (32) of the movable cutting jaw (23) at a position which is in front of the pushing lever (19) when seen in pushing direction of the pushing lever (19).

6. Hand pliers (1) according to one of the preceding claims, **characterized in that**
a) the latching lever (16) and the pushing lever (19) are biased by a biasing spring (13) towards the toothing (32) of the movable cutting jaw (23) and/or
b) an opening spring (11) or the opening spring (11) formed separately from the actuation spring (13) generates an opening force biasing the movable hand lever (3).

7. Hand pliers (1) according to one of the preceding claims, **characterized in that** the stop (67) for defining the first maximum opening position is formed by a front face (69) of a lever part (34) of the latching lever (16) and the lever part (34) forms a lateral contact surface (36) which is contacted by a contact surface (35) of the movable hand lever (3) in the second maximum opening position.

8. Hand pliers (1) of claim 7, **characterized in that** a protrusion (33) of the movable hand lever (3) forms the contact surface (35).

9. Hand pliers (1) according to one of the preceding claims, **characterized in that** a latching nose (30) or a latching toothing of the latching lever (16) is arranged between a pivot joint (53) of the latching lever (16) and an actuation means (57) or the actuation means (57) of the latching lever (16).

10. Hand pliers (1) according to one of the preceding claims, **characterized in that** in a way controlled by movement by the movement of the movable hand lever (3) from the first maximum opening position towards the second maximum opening position the pushing lever (19) is brought out of engagement with the toothing (32) of the movable cutting jaw (23).

## Revendications

1. Pince manuelle (1) avec une mâchoire de coupe fixe (26) et une mâchoire de coupe mobile (23), qui présente une denture (32),
a) la denture (32)
aa)pouvant être emboîtée, pour la réalisation d'un mouvement de fermeture des mâchoires de coupe (23, 26), avec un levier de poussée (19) déplacé par l'intermédiaire d'un levier manuel mobile (3) et
ab)pouvant être emboîté, pour la sécurisation d'une position atteinte par les mâchoires de coupe (23, 26) avec le levier d'encliquetage (16),
b) la pince manuelle (1)
ba)comprenant une première position d'ouverture maximale, dans laquelle le levier d'encliquetage (16) et/ou le levier de poussée (19) est/sont ou peut/peuvent être emboîté(s) avec la denture (32) de la mâchoire de coupe mobile (23) et
bb)comprenant une deuxième position d'ouverture maximale, dans laquelle un angle d'ouverture du levier manuel (2, 3) est supérieur à celui dans la première position d'ouverture maximale et dans laquelle le levier d'encliquetage (16) et/ou le levier de poussée (19) n'est/ne sont pas emboîté(s) avec la denture (32) de la mâchoire de coupe mobile (23),
c) la première position d'ouverture maximale étant prédéfinie par une butée (67) sur le levier d'encliquetage (16), contre laquelle, dans la première position d'ouverture maximale, le levier manuel mobile (3) s'appuie et
d) la deuxième position d'ouverture maximale est prédéfinie par une butée (68) sur le levier d'encliquetage (16) ou sur un palier de pivotement (53) du levier d'encliquetage (16), contre laquelle, dans la deuxième position d'ouverture maximale, le levier manuel mobile (3) s'appuie.

2. Pince manuelle (1) selon la revendication 1, **caractérisée en ce que** le levier manuel mobile (3) est sollicité, dans la première position d'ouverture maximale et dans la deuxième position d'ouverture maximale, par le même ressort d'ouverture (11) contre la butée (67 ; 68) correspondante.

3. Pince manuelle (1) selon l'une des revendications précédentes, **caractérisée en ce que** le levier d'encliquetage (16) présente, au niveau d'une zone d'extrémité, un organe d'actionnement (57) dépassant de la tête de la pince.

4. Pince manuelle (1) selon l'une des revendications précédentes, **caractérisée en ce qu'**une poignée (7) du levier manuel mobile (3) et le levier d'encliquetage (16) sont disposés dans le même plan semi-longitudinal (65) de la pince manuelle (1).

5. Pince manuelle (1) selon l'une des revendications précédentes, **caractérisée en ce que** le levier d'encliquetage (16) est emboîté, dans la direction d'avance du levier de poussée (19), avant le levier de poussée (19), avec la denture (32) de la mâchoire de coupe mobile (23).

6. Pince manuelle (1) selon l'une des revendications précédentes, **caractérisée en ce que**
a) le levier d'encliquetage (16) et le levier de poussée (19) sont sollicités par l'intermédiaire d'un ressort de sollicitation (13) en direction de la denture (32) de la mâchoire de coupe mobile (23) et/ou
b) un ressort d'ouverture (11) formé séparément du ressort de sollicitation (13) génère une force d'ouverture agissant sur le levier manuel mobile (3).

7. Pince manuelle (1) selon l'une des revendications précédentes, **caractérisée en ce que** la butée (67) est conçue pour prédéfinir la première position d'ouverture maximale d'un côté frontal (69) d'une partie de levier (34) du levier d'encliquetage (16) et la partie de levier (34) présente une surface de contact latérale (36) contre laquelle, dans la deuxième position d'ouverture maximale, une surface d'appui (35) du levier manuel mobile (3) s'appuie.

8. Pince manuelle (1) selon la revendication 7, **caractérisée en ce qu'**une saillie (33) du levier manuel mobile (3) présente la surface d'appui (35).

9. Pince manuelle (1) selon l'une des revendications précédentes, **caractérisée en ce qu'**un embout d'encliquetage (30) ou une denture d'encliquetage du levier d'encliquetage (16) est disposé entre un palier de pivotement (53) du levier d'encliquetage (16) et un ou l'organe d'actionnement (57) du levier d'encliquetage (16).

10. Pince manuelle (1) selon l'une des revendications précédentes, **caractérisée en ce que** levier de poussée (19) est déboîté de la denture (32) de la mâchoire de coupe mobile (23), avec un mouvement contrôlé, par le mouvement du levier manuel mobile (3) de la première position d'ouverture maximale vers la deuxième position d'ouverture maximale.
